# EUROPÄISCHE PATENTSCHRIFT

(11) **EP 4 506 054 B1**
(45) Veröffentlichungstag und Bekanntmachung des Hinweises auf die Patenterteilung: **22.10.2025**
(21) Anmeldenummer: 24187131.8
(22) Anmeldetag: 08.07.2024
(51) Int. Cl.: B01D 46/00, B01D 46/24, B01D 46/58, B01D 46/88, B05B 7/14, B05B 14/43

(54) **PULVERABSCHEIDUNGSVORRICHTUNG, PULVERBESCHICHTUNGSANLAGE MIT EINER BESCHICHTUNGSKABINE UND EINER PULVERABSCHEIDUNGSVORRICHTUNG SOWIE ALS FILTERPATRONE AUSGEFÜHRTER FILTER FÜR EINE SOLCHE PULVERABSCHEIDUNGSVORRICHTUNG**
POWDER SEPARATION DEVICE, POWDER COATING INSTALLATION WITH A COATING BOOTH AND A POWDER SEPARATION DEVICE AND FILTER DESIGNED AS A FILTER CARTRIDGE FOR SUCH A POWDER SEPARATION DEVICE
DISPOSITIF DE DÉPÔT DE POUDRE, INSTALLATION DE REVÊTEMENT PAR POUDRE DOTÉE D'UNE CABINE DE REVÊTEMENT ET D'UN DISPOSITIF DE DÉPÔT DE POUDRE AINSI QUE FILTRE CONÇU COMME CARTOUCHE FILTRANTE POUR UN TEL DISPOSITIF DE DÉPÔT DE POUDRE

(30) Priorität: 07.08.2023 DE 102023120925
(43) Veröffentlichungstag der Anmeldung: 12.02.2025
(73) Patentinhaber: Gema Switzerland GmbH, 9200 Gossau (CH)
(72) Erfinder: Steiger, Peter, 9200 Gossau (CH)
(74) Vertreter: Meissner Bolte Partnerschaft mbB

(56) Entgegenhaltungen:
- EP-A1- 0 338 314
- DE-A1- 102007 005 310
- US-A- 5 002 594
- US-A- 5 961 696
- US-A1- 2002 020 160
- US-A1- 2019 255 476
- US-A1- 2019 374 892

## Beschreibung

Die vorliegende Erfindung betrifft allgemein das Fachgebiet der Pulverbeschichtung von Gegenständen.

Insbesondere betrifft die Erfindung eine Pulverbeschichtungsanlage zum Pulverbeschichten von Gegenständen in einer Beschichtungskabine, wobei die Pulverbeschichtungsanlage eine Pulverabscheidungsvorrichtung zur Pulverabscheidung aus einem Pulver-Luft-Gemisch aufweist. Das Pulver-Luft-Gemisch fällt insbesondere in einem Beschichtungsbetrieb der Pulverbeschichtungsanlage an, wobei es sich hierbei in der Regel um aus einer Beschichtungskabine der Pulverbeschichtungsanlage abgesaugtes Rohgas (Pulver-Luft-Gemisch) handelt.

Die Erfindung betrifft insbesondere auch einen als Filterpatrone ausgeführten Filter für eine solche Pulverabscheidungsvorrichtung.

Aus der Beschichtungstechnik ist es bekannt, bei Pulverbeschichtungskabinen, in welchen Gegenstände mit Hilfe einer Sprühvorrichtung mit Pulver beschichtbar sind, Luft und Überschusspulver aus dem Kabineninnenraum abzusaugen. Hierzu ist es üblich, die Pulverbeschichtungskabine mit einer Absaugkanalanordnung zu versehen, die beispielsweise einen im Kabinenunterbau angeordneten Absaugkanal aufweist, dessen erstes Ende über mindestens eine Absaugöffnung mit dem Kabineninnenraum strömungsmäßig verbunden ist.

Eine solche Pulverbeschichtungskabine ist beispielsweise aus der Druckschrift EP 0 839 583 A2 bekannt.

Hierbei handelt es sich um eine vertikalzylindrische Kabine mit einem trichterförmigen Kabinenboden, welcher im Kabinenzentrum einen Sauganschluss für eine externe Saugquelle aufweist.

Eine ähnliche zylindrische Pulverbeschichtungskabine ist auch aus der Druckschrift DE 195 00 872 A1 bekannt.

Diese Pulverbeschichtungskabine hat zusätzlich zu dem als Absaugtrichter ausgebildeten Kabinenboden einen rinnenartigen Bodenrand entlang der Kabinenwand, über den getrennt vom Absaugstrom des Absaugtrichters ebenfalls Luft- und Pulverpartikel aus der Kabine absaugbar sind.

Aus der Druckschrift DE 198 37 877 A1 ist eine vertikalzylindrische Pulverbeschichtungskabine mit einer ebenen Bodenplatte bekannt.

Durch die Bodenplatte erstreckt sich diametral ein Schlitz, in den aus dem Kabinenboden liegende Pulverpartikel durch eine rotierende Reinigungsvorrichtung geschoben werden können. Sprühbeschichtungspulver wird üblicherweise pneumatisch zu Sprühvorrichtungen, so genannten Sprühpistolen, gefördert und von diesen pneumatisch und durch elektrostatische Unterstützung auf die zu beschichtenden Objekte gesprüht.

In den Pulverbeschichtungskabinen wird üblicherweise während des Sprühbeschichtungsbetriebs ein kleiner Unterdruck aufrechterhalten, damit keine Pulverpartikel aus der Pulverbeschichtungskabine nach außen dringen. Der während des Sprühbeschichtungsbetriebs in den Pulverbeschichtungskabinen üblicherweise aufrechterhaltene Unterdruck dient ferner dazu, Überschusspulver, d.h. vom Objekt abprallende oder an ihm vorbei gesprühte Pulverpartikel, abzusaugen.

Bei Pulverbeschichtungskabinen der gattungsgemäßen Art wird Überschusspulver abgesaugt, um hohe Pulverkonzentrationen im Kabineninnenraum zu vermeiden, welche unter Umständen zu Pulverstaub-Explosionen führen können. Des Weiteren dient das Absaugen von Überschusspulver zur Rückgewinnung und Wiederverwertung des Beschichtungspulvers.

Zur Rückgewinnung von überschüssigem Pulver, also Pulver, welches an dem zu beschichtenden Objekt vorbeigesprüht wurde oder vom Objekt abfällt, ist es bekannt, einen Pulverabscheider beispielsweise in Gestalt eines Fliehkraftabscheiders (Zyklon) strömungsmäßig über eine Absaugöffnung mit dem Kabineninnenraum der Pulverbeschichtungskabine zu verbinden. Ein Sauggebläse, welches beispielsweise an einem Luftauslass des Pulverabscheiders angeschlossen ist, saugt aus dem Kabineninnenraum der Pulverbeschichtungskabine zumindest einen Großteil des Überschusspulvers und Luft durch den Pulverabscheider hindurch ab. Das abgesaugte Pulver wird in dem Pulverabscheider von der Saugluft getrennt und in einen Pulverbehälter weitertransportiert, aus welchem es zusammen mit frischem Beschichtungspulver wieder einer Sprühvorrichtung zur Sprühbeschichtung von Objekten in der Pulverbeschichtungskabine zugeführt werden kann.

Die in dem Pulverabscheider von dem abgesaugten Überschusspulver gereinigte Luft gelangt durch das Sauggebläse entweder in die Raumatmosphäre des Aufstellraums der Pulverbeschichtungskabine bzw. des Pulverabscheiders oder zu einem weiteren Filtersystem (Nach-Filter), in welchem ggf. noch in der Luft vorhandene Pulverpartikel abgetrennt werden.

Insbesondere ist es bekannt, als Pulverabscheider zum Abtrennen von Pulver aus der Absaugluft einen Zyklon bzw. ein Zyklonsystem einzusetzen. Bei Verwendung eines Zyklonsystems, welches beispielsweise aus einem oder mehreren Zyklonen aufgebaut ist, saugt ein Sauggebläse Überschusspulver und Luft aus dem Kabineninnenraum durch das Zyklonsystem, wobei in dem Zyklonsystem die Pulver-Luft-Strömung durch Zyklon-Zentrifugalkräfte in Luft und Pulver getrennt wird. Das abgetrennte Pulver fällt in einen Auffangbehälter unter dem Zyklonsystem, während die von Pulver zumindest halbwegs gereinigte Luft in der Regel über einen Nach-Filter in die Außenatmosphäre geblasen wird. Zyklonsysteme benötigen in der Regel einen solchen Nach-Filter, weil sie feine Pulverpartikel nicht so vollständig vom Luftstrom trennen können, wie es bei einem Filtersystem der Fall wäre. Das von dem Zyklonsystem abgeschiedene Pulver wird in der Regel ebenfalls aufbereitet und wieder zur Sprühbeschichtung verwendet. Hingegen wird das von dem Nach-Filter ausgeschiedene Pulver in der Regel als Abfall behandelt.

Ein in der Pulverbeschichtungstechnik üblicherweise eingesetzter Nach-Filter weist in der Regel mehrere Filterpatronen auf, welche in einem Rohgasraum des Nach-Filters angeordnet sind.

Auf diese Weise stehen die als Filterpatronen ausgeführten Filter mit einer Seite mit dem Rohgas (Pulver-Luft-Gemisch) in Strömungsverbindung, während eine andere Seite der als Filterpatronen ausgeführten Filter mit einem Reingas-führenden Kanal oder mit einem Reingasraum verbindbar sind.

Die als Filterpatrone ausgeführten Filter eines in dem Fachgebiet der Pulverbeschichtung von Werkstücken eingesetzten Nach-Filters sind häufig als Lamellenfilter ausgeführt. Allerdings sind auch andere Ausführungsformen denkbar.

Losgelöst von der tatsächlichen Ausgestaltung der als Filterpatrone ausgeführten Filter lässt es sich im Betrieb des Nach-Filters nicht vermeiden, dass sich an dem Filtermantel des Filters Pulverpartikel aus dem zu reinigenden Pulver-Luft-Gemisch anlagern, infolgedessen die Filter sich desto mehr zusetzen, je länger die Filter im Betrieb sind.

Mit anderen Worten, je länger die Filter im Betrieb sind, umso höher muss die Druckdifferenz sein, damit der Filtermantel der Filter durchströmt werden kann. Um sicherzustellen, dass der Durchströmungswiderstand eines Filters ein gewisses Maß nicht übersteigt, ist es denkbar, die Filter in regelmäßigen Abständen abzureinigen.

Selbst wenn eine Abreinigung der Filter in regelmäßigen Abständen stattfindet, handelt es sich bei den als Filterpatronen ausgeführten Filtern der Nach-Filteranlage um Ersatz- bzw. Verschließteile, die regelmäßig ausgetauscht werden müssen.

Die regelmäßig bei Nach-Filteranlagen zum Einsatz kommenden, austauschbaren Filterpatronen weisen in der Regel einen Patronenflansch auf, welcher lösbar, insbesondere über einen Schnellverschluss, strömungsmäßig mit einer Rohgaskammer des Nach-Filters verbunden sind. Die als Filterpatronen ausgeführten Filter weisen insbesondere einen Aufbau auf, wie er beispielsweise aus der Druckschrift DE 11 2008 002 400 T5 bekannt ist.

Zum Ein- und Ausbauen von solchen Filterpatronen ist es heutzutage notwendig, dass ein Techniker durch eine Öffnung/Tür am Filtergehäuse in die Rohgaskammer des Filters steigt und die entsprechenden Filterpatronen ein- bzw. ausbaut.

Die Befestigung der Filterpatronen zum Filtergehäuse ist dabei entweder durch Schrauben an einem Filterpatronenflansch oder mit einem Schnellverschluss umgesetzt. Der Flansch hat üblicherweise eine runde Form.

Insbesondere ist es bei den derzeit bekannten Nach-Filtersystemen üblich, dass jede Filterpatrone einzeln ein- und ausgebaut wird.

Da andererseits ein Nach-Filter in der Regel eine Vielzahl von als Filterpatrone ausgeführte Filter aufweist, geht ein Wechsel der Filterpatronen mit einem relativ hohen Arbeits- und Zeitaufwand einher, was wiederum zu relativ langen Stillstandzeiten der Pulverbeschichtungsanlage führt.

Die Druckschrift DE 10 2007 005 310 A1 betrifft eine Beschichtungspulver-Filtervorrichtung mit einer Fluidisiervorrichtung zur Fluidisierung von Beschichtungspulver stromaufwärts eines Pulverauslasses.

Die Druckschrift US 5,961,696 A betrifft eine Vorrichtung zur Pulverabscheidung mit mehreren Filterpatronen, die von einem Führungsschienensystem aufgenommen sind.

Die Druckschrift US 2019/0374892 A1 betrifft ebenfalls eine Pulverabscheidungsvorrichtung mit als Filterpatrone ausgeführten Filtern. Eine solche Pulverabscheidungsvorrichtung ist auch aus der Druckschrift US 2002/020160 A1 sowie aus der Druckschrift US 2019/255476 A1 bekannt.

Der Erfindung liegt die Aufgabe zu Grunde, eine Pulverabscheidungsvorrichtung für eine Pulverbeschichtungsanlage der zuvor beschriebenen Art anzugeben, bei welcher ein Wechsel der als Filterpatronen ausgeführten Filter mit möglichst geringem Zeit- und Arbeitsaufwand umsetzbar ist.

Des Weiteren ist eine Aufgabe der Erfindung darin zu sehen, einen als Filterpatrone ausgeführten Filter anzugeben, welcher den Austausch der Filterpatrone bei einer Pulverabscheidungsvorrichtung einer Pulverbeschichtungsanlage entsprechend vereinfacht.

Im Hinblick auf die Pulverabscheidungsvorrichtung wird die der Erfindung zu Grunde liegende Aufgabe durch den Gegenstand des unabhängigen Patentanspruchs 1 gelöst, wobei vorteilhafte Weiterbildungen der erfindungsgemäßen Pulverabscheidungsvorrichtung in den abhängigen Ansprüchen 2 bis 6 angegeben sind.

Im Hinblick auf den Filter wird die der Erfindung zu Grunde liegende Aufgabe durch den Gegenstand des nebengeordneten Patentanspruchs 8 gelöst, wobei vorteilhafte Weiterbildungen des erfindungsgemäßen Filters in den abhängigen Ansprüchen 9 bis 12 angegeben sind.

Demgemäß betrifft die Erfindung insbesondere eine Pulverabscheidungsvorrichtung zur Pulverabscheidung aus einem Pulver-Luft-Gemisch, insbesondere aus einem in einem Beschichtungsbetrieb einer Pulverbeschichtungsanlage anfallenden und aus einer Beschichtungskabine der Beschichtungsanlage abgesaugten Pulver-Luft-Gemisch.

Die erfindungsgemäße Pulverabscheidungsvorrichtung weist ein eine Rohgaskammer zumindest teil- oder bereichsweise umschließendes Gehäuse mit einem mit einem Rohgaskanal strömungsmäßig verbundenen oder verbindbaren Rohgaseinlass und einem Reingasauslass auf. Darüber hinaus weist die erfindungsgemäße Pulverabscheidungsvorrichtung mindestens einen in der Rohgaskammer angeordneten oder anzuordnenden und als Filterpatrone ausgeführten Filter auf, welcher einen Filtermantel und einen mit dem Filtermantel verbundenen Flanschbereich aufweist.

Ferner ist vorgesehen, dass in dem Gehäuse der Pulverabscheidungsvorrichtung ein Führungssystem insbesondere in Gestalt eines Führungsschienensystems ausgebildet ist, welches ausgebildet ist, mit dem Flanschbereich des als Filterpatrone ausgeführten Filters derart wechselzuwirken, dass der als Filterpatrone ausgeführte Filter in einer durch das Führungssystem definierten Einschubrichtung in die Rohgaskammer einschiebbar ist.

Mit dieser Ausgestaltung der erfindungsgemäßen Pulverabscheidungsvorrichtung und insbesondere des als Filterpatrone ausgeführten Filters ist es nicht mehr notwendig, dass zum Auswechseln der Filter ein Techniker in die Rohgaskammer des Gehäuses der Pulverabscheidungsvorrichtung einsteigen muss, um einzeln die als Filterpatronen ausgeführten Filter auszutauschen.

Vielmehr ist es möglich, dass insbesondere von außerhalb des Gehäuses der Pulverabscheidungsvorrichtung und im Einzelnen außerhalb der Rohgaskammer der Pulverabscheidungsvorrichtung die auszuwechselnden und als Filterpatronen ausgeführten Filter in die entsprechende Einschubstellung eingeschoben werden. Dies reduziert deutlich den Zeit- und Arbeitsaufwand, welcher erforderlich ist, um die als Filterpatronen ausgeführten Filter der als Nach-Filter ausgeführten Pulverabscheidungsvorrichtung auszutauschen.

Insbesondere ist gemäß Ausführungsformen der erfindungsgemäßen Pulverabscheidungsvorrichtung vorgesehen, dass die Pulverabscheidungsvorrichtung mindestens zwei jeweils als Filterpatrone ausgeführte Filter aufweist, welche in Reihe hintereinander über das Führungssystem und die entsprechenden Flanschbereiche der mindestens zwei jeweils als Filterpatrone ausgeführten Filter in der durch das Führungssystem definierten Einschubrichtung in die Rohgaskammer einschiebbar bzw. aus der Rohgaskammer ausschiebbar sind.

Gemäß bevorzugten Realisierungen der erfindungsgemäßen Pulverabscheidungsvorrichtung ist vorgesehen, dass dem Führungssystem eine insbesondere manuell betätigbare Arretierung zugeordnet ist, über welche der mindestens eine als Filterpatrone ausgeführte Filter in einer Einschubstellung im Inneren der Rohgaskammer bedarfsweise arretierbar ist.

Bei Ausführungsvarianten der erfindungsgemäßen Pulverabscheidungsvorrichtung ist vorgesehen, dass der Rohgaseinlass beispielsweise in einem oberen Bereich der Rohgaskammer angeordnet ist. Die Rohgaskammer weist ferner einen vorzugsweise in einem unteren Bereich der Rohgaskammer vorgesehenen und strömungsmäßig an einen Austragstrichter angeschlossenen oder anschließbaren Pulverauslass auf.

In einer Einschubstellung des mindestens einen als Filterpatrone ausgeführten Filters ist ein von dem Filtermantel des mindestens einen als Filterpatrone ausgeführten Filters umschlossener Strömungskanal mit einer Reingaskammer der Pulverabscheidungsvorrichtung strömungsmäßig verbunden.

Denkbar in diesem Zusammenhang ist es insbesondere, dass in einer Einschubstellung des mindestens einen als Filterpatrone ausgeführten Filters der mindestens eine als Filterpatrone ausgeführte Filter an eine durch die insbesondere oben und unten offene Rohgaskammer verlaufende Reingasleitung strömungsmäßig angeschlossen ist, wobei die Reingasleitung in die Reingaskammer mündet, welche vorzugsweise seitlich an die Rohgaskammer angrenzt. Allerdings sind hier auch andere Ausgestaltungen denkbar.

Bei dieser denkbaren Realisierung der Pulverabscheidungsvorrichtung bietet es sich an, dass das Führungssystem mindestens eine einem Bodenbereich der Reingasleitung zugehörige Führung aufweist, wobei in einer Einschubstellung des mindestens einen als Filterpatrone ausgeführten Filters der mindestens eine als Filterpatrone ausgeführte Filter unmittelbar angrenzend an einer Bodenöffnung der Reingasleitung anliegt.

Selbstverständlich sind hier aber auch andere Ausführungsvarianten denkbar.

Die Erfindung betrifft ferner eine Pulverbeschichtungsanlage mit einer Beschichtungskabine und einer Pulverabscheidungsvorrichtung der zuvor genannten erfindungsgemäßen Art.

Gemäß einem weiteren Aspekt der Erfindung ist diese auf einen Filter für eine Pulverabscheidungsvorrichtung gerichtet. Bei der Pulverabscheidungsvorrichtung handelt es sich insbesondere um eine Pulverabscheidungsvorrichtung der zuvor beschriebenen erfindungsgemäßen Art.

Der erfindungsgemäße Filter ist als Filterpatrone ausgeführt, welche einen von einem Pulver-Luft-Gemisch (Rohgas) durchströmbaren Strömungskanal umschließenden Filtermantel und einen an einem Endbereich, insbesondere oberen Endbereich, des Filtermantels mit dem Filtermantel verbundenen Flanschbereich aufweist.

In einer Draufsicht auf den Flanschbereich gesehen ist der Flanschbereich zumindest im Wesentlichen rechteckförmig ausgeführt und weist eine insbesondere konzentrisch angeordnete Öffnung auf, die zumindest teil- oder bereichsweise koaxial zu dem Strömungskanal, der von dem Pulver-Luft-Gemisch (Rohgas) durchströmbar ist, ausgerichtet ist.

In diesem Zusammenhang bietet es sich an, dass der Flanschbereich des erfindungsgemäßen und als Filterpatrone ausgeführten Filters derart ausgebildet ist, dass der als Filterpatrone ausgeführte Filter über ein Führungssystem, insbesondere über ein Führungsschienensystem, in eine Rohgaskammer der Pulverabscheidungsvorrichtung einschiebbar bzw. aus einer Rohgaskammer der Pulverabscheidungsvorrichtung ausschiebbar ist.

Gemäß bevorzugten Realisierungen des erfindungsgemäßen und als Filterpatrone ausgeführten Filters ist vorgesehen, dass der Flanschbereich des als Filterpatrone ausgeführten Filters zwei einander gegenüberliegende erste Seitenkanten aufweist, welche derart zumindest teil- oder bereichsweise komplementär zu Führungsschienen des Führungssystems ausgebildet sind, dass über die beiden einander gegenüberliegenden ersten Seitenkanten des Flanschbereichs der als Filterpatrone ausgeführte Filter in die Rohgaskammer der Pulverabscheidungsvorrichtung einschiebbar ist.

Gemäß der Erfindung ist vorgesehen, dass der Flanschbereich des als Filterpatrone ausgeführten Filters gemäß der vorliegenden Erfindung zwei einander gegenüberliegende zweite Seitenkanten aufweist, welche sich jeweils orthogonal zu einer Einschubrichtung des als Filterpatrone ausgeführten Filters erstrecken. Eine erste Seitenkante der zweiten Seitenkanten weist ein erstes Verbindungselement auf, während eine zweite Seitenkante der zweiten Seitenkanten ein zweites Verbindungselement aufweist.

Dabei ist erfindungsgemäß vorgesehen, dass das erste Verbindungselement zumindest teil- oder bereichsweise derart komplementär zu dem zweiten Verbindungselement ausgeführt ist, dass zwischen dem ersten und zweiten Verbindungselement eine formschlüssige Verbindung ausbildbar ist.

Gemäß der Erfindung ist ferner vorgesehen, dass das erste und zweite Verbindungselement ausgebildet sind, mit einem entsprechenden Gegen-Verbindungselement eine Nut-Feder-Verbindung auszubilden. Selbstverständlich kommen aber auch andere Ausführungsvarianten für das erste und zweite Verbindungselement in Frage.

Dabei ist das erste Verbindungselement als eine nach oben gerichtete Nut ausgebildet, welche sich über die gesamte Länge einer ersten Seitenkante der zweiten Seitenkanten erstreckt, wobei das zweite Verbindungselement als eine zu der nach oben gerichteten Nut komplementär ausgeführten und nach unten gerichteten Nut ausgebildet ist, welche sich über die gesamte Länge einer zweiten Seitenkante der zweiten Seitenkanten erstreckt.

Um ein manuelles Ein- und Ausschieben des als Filterpatrone ausgeführten Filters in die bzw. aus der Rohgaskammer der Pulverabscheidungsvorrichtung zu vereinfachen, ist bei dem erfindungsgemäßen Filters vorgesehen, dass in einem Bereich der zweiten Seitenkanten des Flanschbereichs des Filters Griffe, Griff-Ausnahmen oder Griff-Öffnungen ausgebildet sind.

Vorzugsweise weist die insbesondere konzentrisch angeordnete Öffnung des Flanschbereichs des erfindungsgemäßen und als Filterpatrone ausgeführten Filters eine umlaufende Dichtung (Dichtring) auf, welche insbesondere ausgebildet ist, in einer Einbauposition oder Einschubstellung des als Filterpatrone ausgeführten Filters eine strömungsmäßige Verbindung zwischen dem Strömungskanal, welcher von dem Filtermantel des Filters umschlossen wird, und einer Öffnung einer Reingasleitung der Pulverabscheidungsvorrichtung abzudichten.

Der Flanschbereich ist vorzugsweise aus einem elektrisch leitenden Material, insbesondere Kunststoffmaterial, gebildet.

Gemäß Realisierungen des als Filterpatrone ausgeführten Filters ist vorgesehen, dass in dem Flanschbereich mindestens eine Aufnahme oder ein Loch ausgeführt ist, wobei die mindestens eine Aufnahme bzw. das mindestens eine Loch ausgebildet ist, zum Positionieren des Filters in einer Einschubposition innerhalb der Rohgaskammer einer Pulverabscheidungsvorrichtung ein insbesondere stiftförmiges Klemmelement zumindest teil- oder bereichsweise formschlüssig aufzunehmen.

Nachfolgend wird die Erfindung anhand der in den beiliegenden Zeichnungen gezeigten exemplarischen Ausführungsformen näher beschrieben.

Es zeigen:
- FIG. 1: schematisch eine exemplarische Ausführungsform einer Pulverbeschichtungsanlage mit einer Pulverabscheidungsvorrichtung gemäß der vorliegenden Erfindung;
- FIG. 2: schematisch und in einer teilgeschnittenen Ansicht eine exemplarische Ausführungsform einer Pulverabscheidungsvorrichtung gemäß der vorliegenden Erfindung;
- FIG. 3: schematisch und in einer isometrischen Ansicht eine exemplarische Ausführungsform des erfindungsgemäßen und als Filterpatrone ausgeführten Filters, insbesondere für eine Pulverabscheidungsvorrichtung gemäß FIG. 2 bzw. für eine Pulverabscheidungsvorrichtung, wie sie bei der Pulverbeschichtungsanlage gemäß FIG. 1 zum Einsatz kommt;
- FIG. 4: schematisch und in einer Seitenansicht die exemplarische Ausführungsform des erfindungsgemäßen und als Filterpatrone ausgeführten Filters gemäß FIG. 3; und
- FIG. 5: schematisch und in einer Draufsicht auf den Flanschbereich des erfindungsgemäßen und als Filterpatrone ausgeführten Filters gemäß FIG. 3.

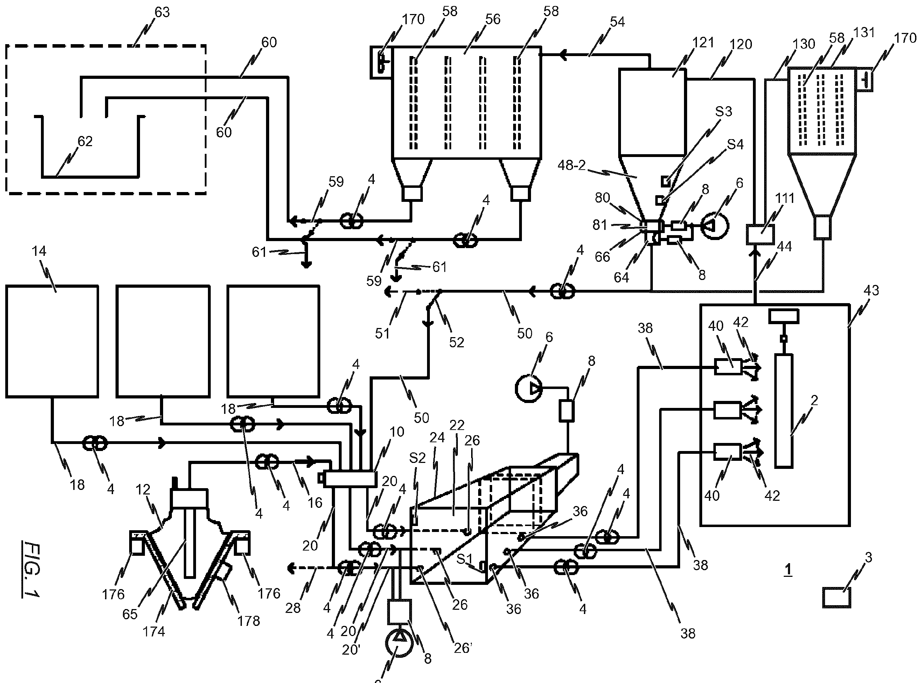

FIG. 1 zeigt schematisch eine exemplarische Ausführungsform einer Pulverbeschichtungsanlage 1 zum Sprühbeschichten von Gegenständen 2 mit Beschichtungspulver, welches danach in einem in FIG. 1 nicht dargestellten Wärmeofen auf die Gegenstände 2 aufgeschmolzen wird. Für die Steuerung der Funktion der Pulverbeschichtungsanlage 1 sind ein oder mehrere elektronische Steuergeräte 3 vorgesehen.

Zur pneumatischen Förderung des Beschichtungspulvers sind Pulverpumpen 4 vorgesehen. Dies können Pulverinjektoren sein, in welchen Beschichtungspulver mittels als Förderdruckluft dienender Druckluft aus einem Pulverbehälter angesaugt wird, wonach dann das Gemisch aus Förderdruckluft und Beschichtungspulver gemeinsam in einen Behälter oder zu einer Sprühvorrichtung strömt.

Geeignete Pulverinjektoren sind beispielsweise aus der Druckschrift EP 0 412 289 B1 bekannt.

Als Pulverpumpe 4 können auch solche Pumpenarten verwendet werden, welche kleine Pulverportionen mittels Druckluft nacheinander fördern, wobei jeweils eine kleine Pulverportion (Pulvermenge) in einer Pulverkammer gespeichert und dann mittels Druckluft aus der Pulverkammer herausgedrückt wird. Die Druckluft bleibt hinter der Pulverportion und schiebt die Pulverportion vor sich her. Diese Pumpenarten werden manchmal als Druckluftschubpumpen oder als Pfropfenförderungs-Pumpen bezeichnet, da die Druckluft die gespeicherte Pulverportion wie einen Pfropfen vor sich her durch eine Pumpenauslassleitung schiebt.

Verschiedene Arten solcher Pulverpumpen zum Fördern von dichtem Beschichtungspulver sind beispielsweise aus folgenden Schriften bekannt: DE 103 53 968 A1, US 6,508,610 B2, US 2006/0193704 A1, DE 101 45 448 A1 oder WO 2005/051549 A1.

Die Erfindung ist nicht auf eine der genannten Arten von Pulverpumpen beschränkt.

Zur Erzeugung der Druckluft für die pneumatische Förderung des Beschichtungspulvers und zur Fluidisierung des Beschichtungspulvers ist eine Druckluftquelle 6 vorgesehen, welche über entsprechende Druckeinstellelemente 8, zum Beispiel Druckregler und/oder Ventile, an die verschiedenen Geräte angeschlossen ist.

Frischpulver von einem Pulverlieferanten wird aus einem Lieferantenbehältnis, was beispielsweise ein Kleinbehältnis 12 zum Beispiel in Form eines formstabilen Behälters oder eines Sackes mit einer Pulvermenge von beispielsweise zwischen 10 bis 50 kg, zum Beispiel 25 kg, oder zum Beispiel ein Großbehältnis 14, beispielsweise ebenfalls ein formstabiler Behälter oder ein Sack, mit einer Pulvermenge zwischen beispielsweise 100 kg und 1.000 kg sein kann, mittels einer Pulverpumpe 4 in einer Frischpulverleitung 16 oder 18 einer Siebvorrichtung 10 zugeführt. Die Siebvorrichtung 10 kann mit einem Vibrator versehen sein. In der folgenden Beschreibung bedeuten die Ausdrücke "Kleinbehälter" und "Großbehälter" jeweils sowohl "formstabiler Behälter" als auch "nichtformstabiler, flexibler Sack", ausgenommen, wenn ausdrücklich auf die eine oder die andere Behältnisart verwiesen wird.

Das von der Siebvorrichtung 10 gesiebte Beschichtungspulver wird durch Schwerkraft oder vorzugsweise jeweils durch eine Pulverpumpe 4 über eine oder mehrere Pulverzufuhrleitungen 20, 20' durch Pulvereinlassöffnungen 26, 26' in eine Pulverkammer 22 eines formstabilen Pulverbehälters 24 gefördert. Das Volumen der Pulverkammer 22 ist vorzugsweise wesentlich kleiner als das Volumen des Frischpulver-Kleinbehälters 12.

Gemäß einer denkbaren Realisierung der erfindungsgemäßen Lösung ist die Pulverpumpe 4 der mindestens einen Pulverzufuhrleitung 20, 20' zu dem Pulverbehälter 24 eine Druckluftschubpumpe. Hierbei kann der Anfangsabschnitt der Pulverzufuhrleitung 20 als Pumpenkammer dienen, in welche von der Siebvorrichtung 10 gesiebtes Pulver durch ein Ventil, zum Beispiel ein Quetschventil, fällt. Nachdem diese Pumpenkammer eine bestimmte Pulverportion enthält, wird die Pulverzufuhrleitung 20 durch Schließen des Ventils von der Siebvorrichtung 10 strömungsmäßig getrennt. Danach wird die Pulverportion mittels Druckluft durch die Pulverzufuhrleitung 20, 20' in die Pulverkammer 22 gestoßen.

An ein oder vorzugsweise mehrere Pulverauslassöffnungen 36 des Pulverbehälters 24 sind Pulverpumpen 4, zum Beispiel Pulverinjektoren, zur Förderung von Beschichtungspulver durch Pulverleitungen 38 zu Sprühvorrichtungen 40 angeschlossen. Die Sprühvorrichtungen 40 können Sprühdüsen oder Rotationszerstäuber zum Sprühen des Beschichtungspulvers 42 auf den zu beschichtenden Gegenstand 2 aufweisen, welcher sich vorzugsweise in einer Beschichtungskabine 43 befindet.

Die Pulverauslassöffnungen 36 können sich - wie in FIG. 1 dargestellt - in einer Wand des Pulverbehälters 24 befinden, welche der Wand gegenüberliegt, in welcher sich die Pulvereinlassöffnungen 26, 26' befinden. Alternativ hierzu ist es aber auch denkbar, wenn die Pulverauslassöffnungen 36 in einer Wand des Pulverbehälters 24 angeordnet sind, welche angrenzend zu der Wand ist, in welcher sich die Pulvereinlassöffnungen 26, 26' befinden. Die Pulverauslassöffnungen 36 sind vorzugsweise nahe dem Boden der Pulverkammer 22 angeordnet.

Die Pulverkammer 22 hat vorzugsweise eine Größe, die im Bereich eines Fassungsvermögens an Beschichtungspulver zwischen 1,0 kg und 12,0 kg liegt, vorzugsweise zwischen 2,0 kg und 8,0 kg.

Gemäß anderen Gesichtspunkten beträgt die Größe der Pulverkammer 22 vorzugsweise zwischen 500 cm³ und 30.000 cm³, vorzugsweise zwischen 2.000 cm³ und 20.000 cm³.

Die Größe der Pulverkammer 22 wird in Abhängigkeit von der Anzahl der Pulverauslassöffnungen 36 und der daran angeschlossenen Pulverleitungen 38 derart gewählt, dass ein kontinuierlicher Sprühbeschichtungsbetrieb möglich ist, jedoch die Pulverkammer 22 in Beschichtungspausen für einen Pulverwechsel schnell gereinigt werden kann, vorzugsweise automatisch.

Die Pulverkammer 22 kann mit einer Fluidisiereinrichtung 30 zum Fluidisieren des im Pulverbehälter 24 aufgenommenen Beschichtungspulvers versehen werden. Die Fluidisiereinrichtung 30 enthält mindestens eine Fluidisierwand aus einem offenporigen oder mit engen Bohrungen versehenen Material, welches für Druckluft, jedoch nicht für Beschichtungspulver durchlässig ist.

Obwohl in FIG. 1 nicht gezeigt, ist es von Vorteil, wenn bei dem Pulverbehälter 24 die Fluidisierwand den Boden des Pulverbehälters 24 ausbildet und zwischen der Pulverkammer 22 und einer Fluidisier-Druckluftkammer angeordnet ist. Die Fluidisier-Druckluftkammer sollte über ein Druckeinstellelement 8 mit der Druckluftquelle 6 verbindbar sein.

Beschichtungspulver 42, welches nicht an dem zu beschichtenden Gegenstand 2 haftet, wird als Überschusspulver über eine Überschusspulverleitung bzw. Absaugkanal 44 mittels eines Saugluftstromes eines Gebläses 170 wahlweise in einen von hier insgesamt zwei zur Verfügung stehenden Pulverabscheidern 121, 131 gesaugt. Das Überschusspulver wird in dem betreffenden Pulverabscheider 121, 131 soweit wie möglich vom Saugluftstrom getrennt.

Der getrennte Pulveranteil kann dann als Rückgewinnungspulver bzw. Recoverypulver von dem betreffenden Pulverabscheider 121, 131 über eine Pulverrückgewinnungsleitung 50 zu der Siebvorrichtung 10 geleitet, wo es durch die Siebvorrichtung 10 hindurch, entweder allein oder vermischt mit Frischpulver über die Pulverzufuhrleitungen 20, 20' wieder in die Pulverkammer 22 gelangt. In der in FIG. 1 schematisch dargestellten Ausführungsform ist nur der mit der Bezugsziffer "121" bezeichnete (erste) Pulverabscheider mit einer entsprechenden Pulverrückgewinnungsleitung 50 versehen.

Es ist eine mit einem Absaugkanal 44 der Pulverbeschichtungskabine 43 strömungsmäßig verbundene oder verbindbare Wechseleinrichtung 111 vorgesehen. Die Wechseleinrichtung 111 ist ausgebildet, wahlweise den Absaugkanal 44 der Pulverbeschichtungskabine 43 strömungsmäßig mit dem Einlass einer ersten Rohgasleitung 120 oder mit dem Einlass mindestens einer weiteren, zweiten Rohgasleitung 130 zu verbinden. Bei der in FIG. 1 dargestellten Ausführungsform ist die erste Rohgasleitung 120 dem ersten Pulverabscheider 121 und die mindestens eine zweite Rohgasleitung 130 mindestens einem zweiten Pulverabscheider 131 zugeordnet ist.

Je nach Pulversorte und/oder Pulververschmutzungsgrad kann auch die Möglichkeit vorgesehen werden, die Pulverrückgewinnungsleitung 50 von der Siebvorrichtung 10 zu trennen und das Rückgewinnungspulver (Recoverypulver) in einen Abfallbehälter zu leiten, wie dies in FIG. 1 durch eine gestrichelte Linie 51 schematisch dargestellt ist. Die Pulverrückgewinnungsleitung 50 kann, damit sie nicht von der Siebvorrichtung 10 getrennt zu werden braucht, mit einer Weiche 52 versehen werden, an welche sie alternativ mit der Siebvorrichtung 10 oder mit einem Abfallbehälter verbindbar ist.

Der Pulverbehälter 24 kann einen oder mehrere, beispielsweise zwei Sensoren S1 und/oder S2 aufweisen, um die Zufuhr von Beschichtungspulver in die Pulverkammer 22 mittels des Steuergerätes 3 und der Pulverpumpen 4 in den Pulverzuleitungen 20, 20' zu steuern. Beispielsweise detektiert der untere Sensor S1 ein unteres Pulverniveaulimit und der obere Sensor S2 ein oberes Pulverniveaulimit.

Der untere Endabschnitt 48-2 des ersten Pulverabscheiders 121 kann als Vorratsbehälter für Rückgewinnungspulver ausgebildet und verwendet werden und hierfür mit einem oder mehreren, beispielsweise zwei Sensoren S3 und/oder S4 versehen werden, welche funktionsmäßig mit dem Steuergerät 3 verbunden sind. Dadurch kann beispielsweise automatisch die Frischpulverzufuhr durch die Frischpulverzuleitungen 16 und 18 gestoppt werden, solange im ersten Pulverabscheider 121 ausreichend Rückgewinnungspulver vorhanden ist, um der Pulverkammer 22 durch die Siebvorrichtung 10 hindurch Rückgewinnungspulver in ausreichender Menge zuzuführen, welche für den Sprühbeschichtungsbetrieb mittels der Sprühvorrichtungen 40 erforderlich ist. Wenn im ersten Pulverabscheider 121 hierfür nicht mehr ausreichend Rückgewinnungspulver vorhanden ist, kann automatisch auf die Zufuhr von Frischpulver durch die Frischpulverzuleitungen 16 oder 18 umgeschaltet werden. Ferner besteht auch die Möglichkeit, Frischpulver und Rückgewinnungspulver gleichzeitig der Siebvorrichtung 10 zuzuführen, so dass sie miteinander vermischt werden.

Die Abluft der Pulverabscheider 121, 131 gelangt über eine Abluftleitung 54 in eine Nachfiltervorrichtung 56 und darin durch ein oder mehrere Filterelemente 58 zu dem Gebläse 170 und nach diesem in die Außenatmosphäre. Die Filterelemente 58 können Filtersäcke oder Filterpatronen oder Filterplatten oder ähnliche Filterelemente sein. Das mittels der Filterelemente 58 vom Luftstrom getrennte Pulver ist normalerweise Abfallpulver und fällt durch Schwerkraft in einen Abfallbehälter oder kann, wie in FIG. 1 gezeigt, über eine oder mehrere Abfallleitungen 60, welche jeweils eine Pulverpumpe 4 enthalten, in einen Abfallbehälter 62 an einer Abfallstation 63 gefördert werden.

Je nach Pulverart und Pulverbeschichtungsbedingungen kann das Abfallpulver auch wieder zurückgewonnen werden zur Siebvorrichtung 10, um erneut in den Beschichtungskreislauf zu gelangen. Dies ist in FIG. 1 durch Weichen 59 und Zweigleitungen 61 der Abfallleitungen 60 schematisch dargestellt.

Beim Mehrfarbenbetrieb, bei welchem verschiedene Farben jeweils nur kurze Zeit versprüht werden, werden üblicherweise mehrere (unterschiedliche) Pulverabscheider 121, 131 und eine Nachfiltervorrichtung 56 verwendet und das Abfallpulver der Nachfiltervorrichtung 56 gelangt in den Abfallbehälter 62. Der Pulverabscheide-Wirkungsgrad der Pulverabscheider 121, 131 ist - zumindest wenn diese als Fliehkraftabscheider (Zyklonabscheider) ausgebildet sind - zwar meistens geringer als der der Nachfiltervorrichtung 56, jedoch kann mit der Wechslereinrichtung 111 je nach Pulversorte zwischen den Pulverabscheidern 121, 131 umgewechselt werden.

Bei der in FIG. 1 schematisch dargestellten Ausführungsform ist der mit der Bezugsziffer "121" bezeichnete Pulverabscheider als Fliehkraftabscheider (Zyklonabscheider) ausgeführt, dem ferner ein Pulver-Rückführungssystem zugeordnet ist. Der als Fliehkraftabscheider ausgeführte Pulverabscheider 121 ist - wie in FIG. 1 schematisch angedeutet - stromabwärts mit einer vorzugsweise als Platten- bzw. Patronenabscheider ausgeführten Nachfiltervorrichtung 56 verbunden.

Hingegen ist der weitere in FIG. 1 schematisch dargestellte und mit der Bezugsziffer "131" bezeichnete Pulverabscheider beispielsweise als Platten- bzw. Patronenabscheider ausgeführt und mit einem entsprechenden Sauggebläse 170 versehen. Diesem als Platten- bzw. Patronenabscheider ausgeführten Pulverabscheider 131 ist ebenfalls ein Pulver-Rückführungssystem zugeordnet, wie es in FIG. 1 schematisch angedeutet ist.

Wie in FIG. 1 angedeutet, kann das untere Ende zumindest des ersten Pulverabscheiders 121 ein Auslassventil 64, beispielsweise ein Quetschventil aufweisen. Ferner kann oberhalb von diesem Auslassventil 64, im oder am unteren Ende des als Vorratsbehälter ausgebildeten unteren Endabschnittes 48-2 des Pulverabscheiders 121 eine Fluidisiereinrichtung 66 zum Fluidisieren des Beschichtungspulvers vorgesehen sein. Die Fluidisiereinrichtung 66 enthält mindestens eine Fluidisierwand 80 aus einem offenporigen oder mit engen Bohrungen versehenen Material, welches für Druckluft, jedoch nicht für Beschichtungspulver durchlässig ist. Die Fluidisierwand 80 ist zwischen dem Pulverweg und einer Fluidisier-Druckluftkammer 81 angeordnet. Die Fluidisier-Druckluftkammer 81 ist über ein Druckeinstellelement 8 mit der Druckluftquelle 6 verbindbar.

Die Frischpulverleitung 16 und/oder 18 kann an ihrem stromaufwärtigen Ende, entweder direkt oder durch die Pulverpumpe 4, mit einem Pulverförderrohr 65 strömungsmäßig verbunden sein, welches in den Lieferantenbehälter 12 oder 14 eintauchbar ist zum Absaugen von frischem Beschichtungspulver. Die Pulverpumpe 4 kann am Anfang, am Ende oder dazwischen in der Frischpulverleitung 16 bzw. 18 oder am oberen oder unteren Ende des Pulverförderrohres 65 angeordnet werden.

FIG. 1 zeigt als Frischpulver-Kleinbehälter einen Frischpulver-Pulversack 12 in einem Sackaufnahmetrichter 174. Der Pulversack 12 wird von dem Sackaufnahmetrichter 174 in einer definierten Form gehalten, wobei die Sacköffnung sich am oberen Sackende befindet. Der Sackaufnahmetrichter 174 kann auf einer Waage oder Wägesensoren 176 angeordnet werden. Diese Waage oder die Wägesensoren 176 können, je nach Art, eine optische Anzeige und/oder ein elektrisches Signal erzeugen, welches nach Abzug des Gewichts des Sackaufnahmetrichters 174 dem Gewicht und damit auch der Menge des Beschichtungspulvers in dem Kleinbehälter 12 entspricht. Am Sackaufnahmetrichter 174 ist vorzugsweise mindestens ein in vibrierender Vibrator 178 angeordnet.

Es können zwei oder mehr Kleinbehälter 12 jeweils in einem Sackaufnahmetrichter 74 und/oder zwei oder mehr Großbehältnisse 14 vorgesehen werden, die alternativ benutzbar sind. Dadurch ist ein schneller Wechsel von einem auf einen anderen Kleinbehälter 12 oder Großbehältnis 14 möglich.

Obwohl in FIG. 1 nicht dargestellt, ist es grundsätzlich denkbar, dass die Siebvorrichtung 10 in dem Pulverbehälter 24 integriert ist.

Ferner kann die Siebvorrichtung 10 weggelassen werden, wenn das Frischpulver eine ausreichend gute Qualität hat. In diesem Fall besteht ferner die Möglichkeit, zum Sieben des Rückgewinnungspulvers der Leitungen 44 und 50 ein separates Sieb zu verwenden, zum Beispiel stromaufwärts oder stromabwärts des ersten Pulverabscheiders 121 oder im Pulverabscheider 121 selber. Auch das Rückgewinnungspulver benötigt dann kein Sieb, wenn seine Pulverqualität für eine Wiederverwendung ausreichend gut ist.

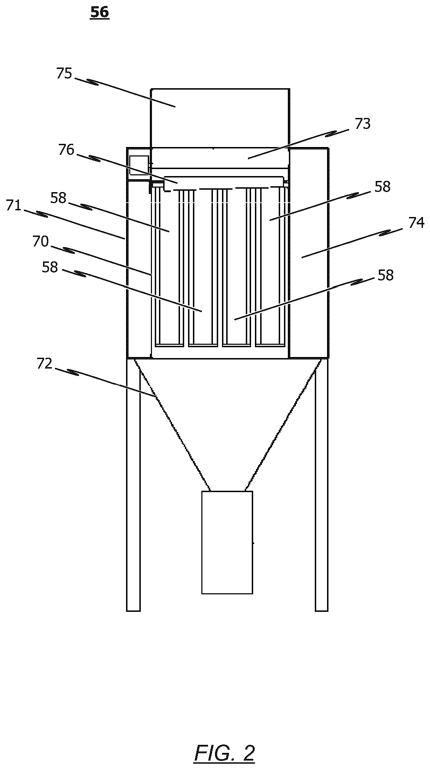

FIG. 2 zeigt schematisch in einer Seiten-Schnittansicht eine als Nach-Filter beispielsweise bei der in FIG. 1 schematisch gezeigten Pulverbeschichtungsanlage 1 zum Einsatz kommende Pulverabscheidungsvorrichtung 56.

Die in FIG. 2 schematisch dargestellte Pulverabscheidungsvorrichtung 56 dient zur Pulverabscheidung aus einem Pulver-Luft-Gemisch, insbesondere aus einem in einem Beschichtungsbetrieb einer Pulverbeschichtungsanlage 1 anfallenden und aus einer Beschichtungskabine 43 der Pulverbeschichtungsanlage 1 abgesaugten Pulver-Luft-Gemisch.

Wie dargestellt, weist die Pulverabscheidungsvorrichtung 56 ein Gehäuse 71 auf, welches zumindest teil- oder bereichsweise eine Rohgaskammer 70 umschließt. Das Gehäuse 71 ist mit einem mit einem Rohgaskanal 75 strömungsmäßig verbundenen oder verbindbaren Rohgaseinlass sowie mit einem Reingasauslass versehen.

Der schematischen Darstellung in FIG. 2 ist ferner zu entnehmen, dass in der Rohgaskammer 70 mehrere jeweils als Filterpatrone 58 ausgeführte Filter angeordnet sind. Diese als Filterpatrone 58 ausgeführten Filter sind insbesondere austauschbar bzw. auswechselbar in der Rohgaskammer 70 angeordnet.

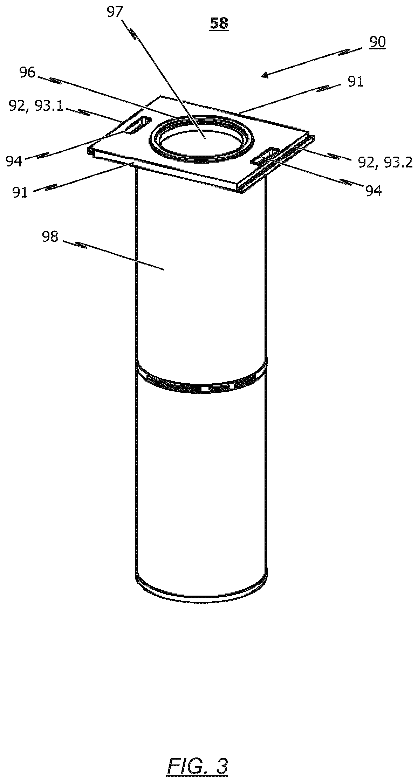

Wie es anschließend unter Bezugnahme auf die Darstellungen in FIG. 3 bis FIG. 5 näher beschrieben wird, weist jeder als Filterpatrone 58 ausgeführte Filter einen Filtermantel 98 und einen mit dem Filtermantel 98 verbundenen Flanschbereich 90 auf.

Unter dem hierin verwendeten Begriff "Rohgas" ist allgemein das zu reinigende Gas, also das mit Pulverpartikeln angereicherte Gas, typischerweise Luft, zu verstehen, welches zu filtern ist. Unter dem hierin verwendeten Begriff "Reingas" ist allgemein das gefilterte Rohgas zu verstehen, welches also den oder die jeweils als Filterpatronen 58 ausgeführten Filter durchsetzt hat und von Partikeln (Pulverpartikeln) zumindest teilweise befreit ist.

Der schematischen Schnittansicht in FIG. 2 ist zu entnehmen, dass in dem Gehäuse 71 der Pulverabscheidungsvorrichtung 56 ein insbesondere als Führungsschienensystem ausgebildetes Führungssystem 76 vorgesehen ist, welches ausgebildet ist, mit dem Flanschbereich 90 des als Filterpatrone 58 ausgeführten Filters derart wechselzuwirken, dass der als Filterpatrone 58 ausgeführte Filter in einer durch das Führungssystem 76 definierten Einschubrichtung in die Rohgaskammer 70 der Pulverabscheidungsvorrichtung 56 einschiebbar ist.

Insbesondere umfasst die Pulverabscheidungsvorrichtung 56 gemäß der in FIG. 2 schematisch gezeigten Ausführungsform mehrere jeweils als Filterpatrone 58 ausgeführte Filter, welche in Reihe hintereinander über das Führungssystem 76 und die entsprechenden Flanschbereiche 90 der jeweils als Filterpatrone 58 ausgeführten Filter in der durch das Führungssystem 76 definierten Einschubrichtung in die Rohgaskammer 70 vorzugsweise manuell einschiebbar sind.

Obgleich in FIG. 2 nicht dargestellt, ist es insbesondere denkbar, dass dem Führungssystem 76 eine insbesondere manuell betätigbare Arretierung zugeordnet ist, über welche die jeweils als Filterpatrone 58 ausgeführten Filter in einer Einschubstellung im Inneren der Rohgaskammer 70 bedarfsweise arretierbar sind.

Bei der in FIG. 2 schematisch gezeigten Pulverabscheidungsvorrichtung 56 ist der Rohgaseinlass in einem oberen Bereich der Rohgaskammer 70 vorgesehen. Ferner weist die Rohgaskammer 70 einen in einem unteren Bereich der Rohgaskammer 70 angeordneten und strömungsmäßig an einen Austragstrichter 72 angeschlossenen oder anschließbaren Pulverauslass auf.

Jeder als Filterpatrone 58 ausgeführte Filter weist einen von dem Filtermantel 98 des entsprechenden als Filterpatrone 58 ausgeführten Filters umschlossenen Strömungskanal 97 auf, welcher in einer Einschubstellung des entsprechenden als Filterpatrone 58 ausgeführten Filters mit einer Reingaskammer 74 der Pulverabscheidungsvorrichtung 56 strömungsmäßig verbunden ist.

Insbesondere ist dabei bei der in FIG. 2 schematisch gezeigten exemplarischen Ausführungsform der erfindungsgemäßen Pulverabscheidungsvorrichtung 56 vorgesehen, dass in einer Einschubstellung der jeweils als Filterpatrone 58 ausgeführten Filter jeder als Filterpatrone 58 ausgeführte Filter an eine durch die insbesondere oben und unten offene Rohgaskammer 70 verlaufende Reingasleitung 73 strömungsmäßig angeschlossen ist, wobei die Reingasleitung 73 in die bereits genannte Reingaskammer 74 mündet, welche bei der gezeigten Ausführungsform der Pulverabscheidungsvorrichtung 56 seitlich an die Rohgaskammer 70 angrenzt.

Wie es ebenfalls der Darstellung in FIG. 2 entnommen werden kann, weist das Führungssystem 76 mindestens eine einem Bodenbereich der Reingasleitung 73 zugehörige Führung auf. In einer Einschubstellung der jeweiligen als Filterpatrone 58 ausgeführten Filter liegt jeder als Filterpatrone 58 ausgeführte Filter unmittelbar angrenzend an einer Bodenöffnung der Reingasleitung 73 an.

Nachfolgend wird unter Bezugnahme auf die Darstellungen in FIG. 3 bis FIG. 5 eine exemplarische Ausführungsform des erfindungsgemäßen und als Filterpatrone 58 ausgeführten Filters beschrieben. Der Filter eignet sich insbesondere für eine Pulverabscheidungsvorrichtung 56, wie sie anhand der exemplarischen Ausführungsform in FIG. 2 zuvor beschrieben wurde.

Kurz zusammengefasst ist der Filter als eine sich in einer vertikalen Richtung erstreckende Filterpatrone 58 ausgeführt, welche einen von einem Pulver-Luft-Gemisch (Rohgas) durchströmbaren Strömungskanal 97 umschließenden Filtermantel 98 und einen an einem Endbereich, insbesondere oberen Endbereich, des Filtermantels 98 mit dem Filtermantel 98 verbundenen Flanschbereich 90 aufweist.

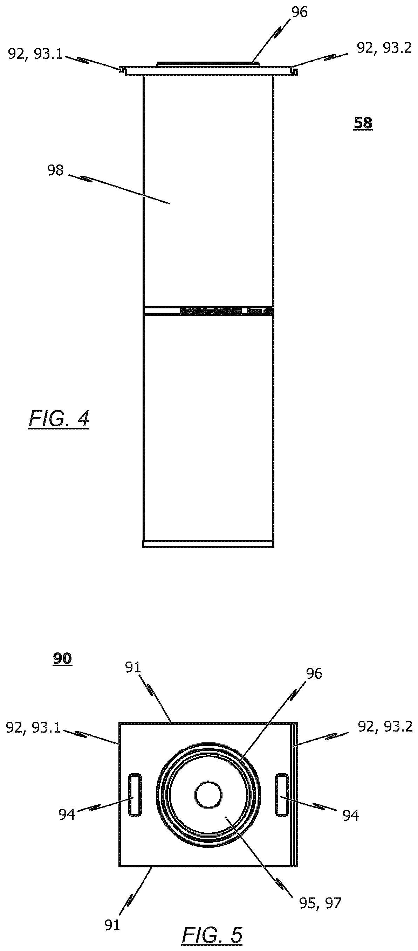

In einer Draufsicht auf den Flanschbereich 90 (vgl. FIG. 5) ist der Flanschbereich 90 zumindest im Wesentlichen rechteckig ausgeführt und weist eine insbesondere konzentrisch angeordnete Öffnung 95 auf, die zumindest teil- oder bereichsweise koaxial zu dem von dem Pulver-Luft-Gemisch (Rohgas) durchströmbaren Strömungskanal 97, der von dem Filtermantel 98 des Filters umschlossen wird, ausgerichtet ist.

Der Flanschbereich 90 des als Filterpatrone 58 ausgeführten Filters ist derart ausgebildet, dass der als Filterpatrone 58 ausgeführte Filter über ein Führungssystem 76 in eine Rohgaskammer 70 der Pulverabscheidungsvorrichtung 56 insbesondere manuell einschiebbar ist.

Wie es insbesondere der isometrischen Ansicht gemäß FIG. 3 oder der Draufsicht gemäß FIG. 5 entnommen werden kann, weist der Flanschbereich 90 des als Filterpatrone 58 ausgeführten Filters zwei einander gegenüberliegende erste Seitenkanten 91 auf, welche derart zumindest teil- oder bereichsweise komplementär zu Führungsschienen des Führungssystems 76 der Pulverabscheidungsvorrichtung 56 ausgebildet sind, dass über die beiden einander gegenüberliegenden ersten Seitenkanten 91 des Flanschbereichs 90 der als Filterpatrone 58 ausgeführte Filter in die Rohgaskammer 70 der Pulverabscheidungsvorrichtung 56 insbesondere manuell einschiebbar ist.

Ebenfalls ist der isometrischen Ansicht gemäß FIG. 3 bzw. der Draufsicht gemäß FIG. 5 zu entnehmen, dass der Flanschbereich 90 des als Filterpatrone 58 ausgeführten Filters zwei einander gegenüberliegende zweite Seitenkanten 92 aufweist, welche sich jeweils orthogonal zu einer Einschubrichtung des als Filterpatrone 58 ausgeführten Filters erstrecken.

Dabei ist insbesondere vorgesehen, dass eine erste Seitenkante der zweiten Seitenkanten 92 ein erstes Verbindungselement 93.1 aufweist bzw. als ein erstes Verbindungselement 93.1 ausgeformt ist, wobei eine zweite Seitenkante der zweiten Seitenkanten 92 ein zweites Verbindungselement 93.2 aufweist bzw. als ein zweites Verbindungselement 93.2 ausgebildet ist. Das erste Verbindungselement 93.1 ist zumindest teil- oder bereichsweise derart komplementär zu dem zweiten Verbindungselement 93.2 ausgeführt, dass zwischen dem ersten und zweiten Verbindungselement 93.1, 93.2 eine formschlüssige Verbindung ausbildbar ist.

Mit anderen Worten, wenn mehrere jeweils als Filterpatrone 58 ausgeführte Filter hintereinander, d.h. der Reihe nach, in die Rohgaskammer 70 der Pulverabscheidungsvorrichtung 56 eingeschoben werden, wirken die Verbindungselemente 93.1, 93.2 der unmittelbar aneinander angrenzenden (zweiten) Seitenkanten 92 der benachbarten jeweils als Filterpatrone 58 ausgeführten Filter derart zusammen, dass zwischen ihnen eine formschlüssige Verbindung ausgebildet wird.

Der isometrischen Ansicht gemäß FIG. 3 sowie der Draufsicht gemäß FIG. 5 ist ferner zu entnehmen, dass in einem Bereich der zweiten Seitenkanten 92 des Flanschbereichs 90 des als Filterpatrone 58 ausgeführten Filters Griff-Ausnahmen 94 oder Griff-Öffnungen ausgebildet sind.

Diesen Ansichten ist ferner zu entnehmen, dass die insbesondere konzentrisch angeordnete Öffnung 95 des Flanschbereichs 90 eine umlaufende Dichtung 96, insbesondere Ringdichtung, aufweist, welche insbesondere ausgebildet ist, in einer Einbauposition oder Einschubstellung des als Filterpatrone 58 ausgeführten Filters eine strömungsmäßige Verbindung zwischen dem Strömungskanal 97 des als Filterpatrone 58 ausgeführten Filters, der von dem Filtermantel 98 des Filters umschlossen wird, und einer Öffnung einer Reingasleitung 73 der Pulverabscheidungsvorrichtung 56 abzudichten.

Nachfolgend werden noch einmal Aspekte des als Filterpatrone 58 ausgeführten Filters zusammengefasst:
- Das Material des Flanschbereichs 90 ist vorzugsweise aus leitendem Kunststoff, um anfallende elektrostatische Ladungen (geladenes Pulvermaterial) abzuleiten.
- Der rechteckförmige, wenn nicht quadratische Flanschbereich 90, hat vorne und hinten je eine gegenseitig ausgerichtete Nut, welche über die gesamte Breite verläuft. Dadurch können die einzelnen Filterpatronen 58 welche in einer Reihe sind, miteinander verbunden werden. D.h. Beim Einlegen der Filterpatronen 58 wird zuerst die erste Filterpatrone 58 in die Führung 76 geschoben und danach die zweite Filterpatrone 58 mit der ersten Filterpatrone58 mit den Nuten verbunden. Der Vorteil liegt darin, dass nicht in das Filtergehäuse gestiegen werden muss zur Montage/Demontage der Filterpatronen 58. Ein- und Ausbau erfolgt von ausserhalb, durch eine an der Aussenwand des Rohgasraumen angebrachten Öffnung. Zudem werden alle Filterpatronen 58, welche sich in einer Reihe befinden, in einem Arbeitsschritt ein- und ausgebaut bzw. es wird nicht jede Filterpatrone einzeln behandelt, weder beim Ein- noch Ausbau. Beim Ausbau wird durch den Griff im Flanschbereich 90 die ganze Reihe herausgezogen, wobei jeweils die Patronen nacheinander voneinander getrennt werden.
- Die Dicke des Flanschbereichs 90 ist unterschiedlich, sodass standardisierte Flanschebereiche nicht verwendet werden können.

Die Erfindung ist nicht auf die in den Zeichnungen gezeigten Ausführungsformen beschränkt, sondern ergibt sich aus einer Zusammenschau sämtlicher hierin offenbarter Merkmale.

### Bezugszeichenliste

- 1: Pulverbeschichtungsanlage
- 2: zu beschichtende Gegenstände
- 3: Steuergerät
- 4: Pulverpumpe
- 6: Druckluftquelle
- 8: Druckeinstellelement
- 10: Siebvorrichtung
- 12: Frischpulver-Kleinbehälter
- 14: Großbehälter
- 16: Frischpulverleitung
- 18: Frischpulverleitung
- 20, 22': Pulverzufuhrleitung
- 22: Pulverkammer
- 24: Pulverbehälter
- 26, 26': Pulvereinlassöffnung
- 30: Fluidisiereinrichtung
- 36: Pulverauslassöffnung
- 38: Pulverleitung
- 40: Sprühvorrichtung
- 42: Beschichtungspulver
- 43: Beschichtungskabine
- 44: Absaugkanal
- 48-2: unterer Endabschnitt des Pulverabscheiders
- 50: Pulverrückgewinnungsleitung
- 52: Weiche
- 54: Abluftleitung
- 56: Nachfiltervorrichtung/Pulverabscheidungsvorrichtung
- 58: Filterelement/Filter/Filterpratrone
- 60: Abfallleitung
- 62: Abfallbehälter
- 63: Abfallstation
- 64: Auslassventil
- 65: Pulverförderrohr
- 66: Fluidisiereinrichtung
- 70: Rohgaskammer
- 71: Gehäuse
- 72: Austragstrichter
- 73: Reingasleitung
- 74: Reingaskammer
- 75: Rohgaskanal
- 76: Führungssystem
- 80: Fluidisierwand
- 81: Fluidisier-Druckluftkammer
- 90: Flanschbereich
- 91: erste Seitenkante
- 92: zweite Seitenkante
- 93.1: erstes Verbindungselement
- 93.2: zweites Verbindungselement
- 94: Griff-Aufnahme/Griff-Öffnung
- 95: Öffnung
- 96: Dichtung
- 97: Strömungskanal
- 98: Filtermantel
- 120: Rohgasleitung
- 121: erster Pulverabscheider
- 130: zweite Rohgasleitung
- 131: zweiter Pulverabscheider
- 170: Gebläse
- 174: Sackaufnahmetrichter
- 176: Wägesensor
- 178: Vibrator

## Patentansprüche

1. Vorrichtung (56) zur Pulverabscheidung aus einem Pulver-Luft-Gemisch, insbesondere aus einem in einem Beschichtungsbetrieb einer Beschichtungsanlage (1) anfallenden und aus einer Beschichtungskabine (43) der Beschichtungsanlage (1) abgesaugten Pulver-Luft-Gemisch, wobei die Vorrichtung (56) Folgendes aufweist:
- ein eine Rohgaskammer (70) zumindest teil- oder bereichsweise umschließendes Gehäuse (71) mit einem mit einem Rohgaskanal (75) strömungsmäßig verbundenen oder verbindbaren Rohgaseinlass und einem Reingasauslass; und
- mindestens einen in der Rohgaskammer (70) angeordneten oder anzuordnenden und als Filterpatrone (58) ausgeführten Filter, welcher einen Filtermantel (98) und einen mit dem Filtermantel (98) verbundenen Flanschbereich (90) aufweist,
wobei in dem Gehäuse (71) der Pulverabscheidungsvorrichtung (56) ein Führungssystem (76), insbesondere Führungsschienensystem, ausgebildet ist, welches ausgebildet ist, mit dem Flanschbereich (90) des als Filterpatrone (58) ausgeführten Filters derart wechselzuwirken, dass der als Filterpatrone (58) ausgeführte Filter in einer durch das Führungssystem (76) definierten Einschubrichtung in die Rohgaskammer (70) einschiebbar ist, wobei der Flanschbereich (90) des als Filterpatrone (58) ausgeführten Filters zwei einander gegenüberliegende zweite Seitenkanten (92) aufweist, welche sich jeweils orthogonal zu einer Einschubrichtung des als Filterpatrone (58) ausgeführten Filters erstrecken, wobei eine erste Seitenkante der zweiten Seitenkanten (92) ein erstes Verbindungselement (93.1) und eine zweite Seitenkante der zweiten Seitenkanten (92) ein zweites Verbindungselement (93.2) aufweist, wobei das erste Verbindungselement (93.1) zumindest teil- oder bereichsweise derart komplementär zu dem zweiten Verbindungselement (93.2) ausgeführt ist, dass zwischen dem ersten und zweiten Verbindungselement (93.1, 93.2) eine formschlüssige Verbindung ausbildbar ist,
**dadurch gekennzeichnet,**
**dass** das erste Verbindungselement (93.1) als eine nach oben gerichtete Nut ausgebildet ist, welche sich über die gesamte Länge einer ersten Seitenkante der zweiten Seitenkanten (92) erstreckt und wobei das zweite Verbindungselement (93.2) als eine zu der nach oben gerichteten Nut komplementär ausgeführten und nach unten gerichteten Nut ausgebildet ist, welche sich über die gesamte Länge einer zweiten Seitenkante der zweiten Seitenkanten (92) erstreckt; und
**dass** in einem Bereich der zweiten Seitenkanten (92) des Flanschbereichs (90) Griffe, Griff-Ausnahmen oder Griff-Öffnungen (94) ausgebildet sind.

2. Vorrichtung (56) nach Anspruch 1,
wobei die Vorrichtung (56) mindestens zwei jeweils als Filterpatrone (58) ausgeführte Filter aufweist, welche in Reihe hintereinander über das Führungssystem (76) und die entsprechenden Flanschbereiche (90) der mindestens zwei jeweils als Filterpatrone (58) ausgeführten Filter in der durch das Führungssystem (76) definierten Einschubrichtung in die Rohgaskammer (70) einschiebbar sind.

3. Vorrichtung (56) nach Anspruch 1 oder 2,
wobei dem Führungssystem (76) eine insbesondere manuell betätigbare Arretierung zugeordnet ist, über welche der mindestens eine als Filterpatrone (58) ausgeführte Filter in einer Einschubstellung im Inneren der Rohgaskammer (70) bedarfsweise arretierbar ist.

4. Vorrichtung (56) nach einem der Ansprüche 1 bis 3,
wobei die Rohgaskammer (70) ferner einen in einem unteren Bereich der Rohgaskammer (70) vorgesehenen und strömungsmäßig an einen Austragstrichter (72) angeschlossenen oder anschließbaren Pulverauslass aufweist.

5. Vorrichtung (56) nach einem der Ansprüche 1 bis 4,
wobei in einer Einschubstellung des mindestens einen als Filterpatrone (58) ausgeführten Filters ein von dem Filtermantel (98) des mindestens einen als Filterpatrone (58) ausgeführten Filters umschlossener Strömungskanal (97) mit einer Reingaskammer (74) der Pulverabscheidungsvorrichtung (56) strömungsmäßig verbunden ist.

6. Vorrichtung (56) nach Anspruch 5,
wobei in einer Einschubstellung des mindestens einen als Filterpatrone (58) ausgeführten Filters der mindestens eine als Filterpatrone (58) ausgeführte Filter an eine Reingasleitung (73) strömungsmäßig angeschlossen ist, wobei die Reingasleitung (73) in die Reingaskammer (74) mündet.

7. Pulverbeschichtungsanlage mit einer Beschichtungskabine (43) und einer Pulverabscheidungsvorrichtung (56) nach einem der Ansprüche 1 bis 6.

8. Filter für eine Pulverabscheidungsvorrichtung (56), insbesondere für eine Pulverabscheidungsvorrichtung (56) nach einem der Ansprüche 1 bis 6, wobei der Filter als Filterpatrone (58) ausgeführt ist, welche einen von einem Pulver-Luft-Gemisch durchströmbaren Strömungskanal (97) umschließenden Filtermantel (98) und einen an einem Endbereich, insbesondere an einem oberen Endbereich, des Filtermantels (98) mit dem Filtermantel (98) verbundenen Flanschbereich (90) aufweist, wobei - in einer Draufsicht auf den Flanschbereich (90) gesehen - der Flanschbereich (90) zumindest im Wesentlichen rechteckförmig ausgeführt ist und eine insbesondere konzentrisch angeordnete Öffnung (95) aufweist, die zumindest teil- oder bereichsweise koaxial zu dem Strömungskanal (97) ausgerichtet ist, und wobei der Flanschbereich (90) vorzugsweise aus einem elektrisch leitenden Material, insbesondere Kunststoffmaterial, gebildet ist, wobei der Flanschbereich (90) des als Filterpatrone (58) ausgeführten Filters zwei einander gegenüberliegende zweite Seitenkanten (92) aufweist, welche sich jeweils orthogonal zu einer Einschubrichtung des als Filterpatrone (58) ausgeführten Filters erstrecken, wobei eine erste Seitenkante der zweiten Seitenkanten (92) ein erstes Verbindungselement (93.1) und eine zweite Seitenkante der zweiten Seitenkanten (92) ein zweites Verbindungselement (93.2) aufweist, wobei das erste Verbindungselement (93.1) zumindest teil- oder bereichsweise derart komplementär zu dem zweiten Verbindungselement (93.2) ausgeführt ist, dass zwischen dem ersten und zweiten Verbindungselement (93.1, 93.2) eine formschlüssige Verbindung ausbildbar ist,
**dadurch gekennzeichnet,**
**dass** das erste Verbindungselement (93.1) als eine nach oben gerichtete Nut ausgebildet ist, welche sich über die gesamte Länge einer ersten Seitenkante der zweiten Seitenkanten (92) erstreckt und wobei das zweite Verbindungselement (93.2) als eine zu der nach oben gerichteten Nut komplementär ausgeführten und nach unten gerichteten Nut ausgebildet ist, welche sich über die gesamte Länge einer zweiten Seitenkante der zweiten Seitenkanten (92) erstreckt; und
**dass** in einem Bereich der zweiten Seitenkanten (92) des Flanschbereichs (90) Griffe, Griff-Ausnahmen oder Griff-Öffnungen (94) ausgebildet sind.

9. Filter nach Anspruch 8,
wobei der Flanschbereich (90) des als Filterpatrone (58) ausgeführten Filters derart ausgebildet ist, dass der als Filterpatrone (58) ausgeführte Filter über ein Führungssystem (76) in eine Rohgaskammer (70) der Pulverabscheidungsvorrichtung (56) einschiebbar ist.

10. Filter nach Anspruch 8 oder 9,
wobei der Flanschbereich (90) des als Filterpatrone (58) ausgeführten Filters zwei einander gegenüberliegende erste Seitenkanten (91) aufweist, welche derart zumindest teil- oder bereichsweise komplementär zu Führungsschienen des Führungssystems (76) ausgebildet sind, dass über die beiden einander gegenüberliegenden ersten Seitenkanten (91) des Flanschbereichs (90) der als Filterpatrone (58) ausgeführte Filter in die Rohgaskammer (70) der Pulverabscheidungsvorrichtung (56) einschiebbar ist.

11. Filter nach einem der Ansprüche 8 bis 10,
wobei die insbesondere konzentrisch angeordnete Öffnung (95) des Flanschbereichs (90) eine umlaufende Dichtung (96) aufweist, welche insbesondere ausgebildet ist, in einer Einbauposition oder Einschubstellung des als Filterpatrone (58) ausgeführten Filters eine strömungsmäßige Verbindung zwischen dem Strömungskanal (97) und einer Öffnung einer Reingasleitung (73) abzudichten.

12. Filter nach einem der Ansprüche 8 bis 11,
wobei in dem Flanschbereich (90) mindestens eine Aufnahme oder ein Loch ausgeführt ist, wobei die mindestens eine Aufnahme bzw. das mindestens eine Loch ausgebildet ist, zum Positionieren des Filters in einer Einschubposition innerhalb der Rohgaskammer (70) einer Pulverabscheidungsvorrichtung (56) ein insbesondere stiftförmiges Klemmelement zumindest teil- oder bereichsweise formschlüssig aufzunehmen.

## Claims

1. A device (56) for separating powder from a powder-air mixture, in particular from a powder-air mixture produced during a coating operation of a coating installation (1) and extracted from a coating booth (43) of the coating installation (1), the device (56) comprising:
- a housing (71) enclosing at least part or an area of a raw gas chamber (70) and having a raw gas inlet fluidically connected or connectable to a raw gas duct (75) and a clean gas outlet; and
- at least one filter arranged or to be arranged in the raw gas chamber (70) and designed as a filter cartridge (58) comprising a filter jacket (98) and a flange portion (90) connected to the filter jacket (98),
wherein a guide system (76), in particular a guide rail system, is formed in the housing (71) of the powder separation device (56), which guide system is designed to interact with the flange portion (90) of the filter designed as a filter cartridge (58) in such a way that the filter designed as a filter cartridge (58) can be inserted into the raw gas chamber (70) in an insertion direction defined by the guide system (76), wherein the flange portion (90) of the filter designed as a filter cartridge (58) has two second side edges (92) opposite one another (92) which each extend orthogonally to an insertion direction of the filter designed as a filter cartridge (58), wherein a first side edge of the second side edges (92) has a first connecting element (93.1) and a second side edge of the second side edges (92) has a second connecting element (93.2), wherein the first connecting element (93.1) is designed at least partially or in areas to be complementary to the second connecting element (93.2) in such a way that a form-fitting connection can be formed between the first and second connecting elements (93.1, 93.2),
**characterized in that**
the first connecting element (93.1) is designed as an upwardly directed groove which extends over the entire length of a first side edge of the second side edges (92) and wherein the second connecting element (93.2) is designed as a downwardly directed groove that is complementary to the upwardly directed groove and extends over the entire length of a second side edge of the second side edges (92); and
that grips, grip recesses or grip openings (94) are formed in a region of the second side edges (92) of the flange portion (90).

2. The device (56) according to claim 1,
wherein the device (56) has at least two filters, each designed as a filter cartridge (58), which are arranged in series one behind the other via the guide system (76) and the corresponding flange portions (90) of the at least two filters, each designed as a filter cartridge (58), can be inserted into the raw gas chamber (70) in the insertion direction defined by the guide system (76).

3. The device (56) according to claim 1 or 2,
wherein the guide system (76) is assigned a locking device, in particular one that can be operated manually, by means of which the at least one filter designed as a filter cartridge (58) can be locked in an insertion position inside the raw gas chamber (70) as required.

4. The device (56) according to any one of claims 1 to 3,
wherein the raw gas chamber (70) further comprises a powder outlet provided in a lower region of the raw gas chamber (70) and connected or connectable in terms of flow to a discharge funnel (72).

5. The device (56) according to any one of claims 1 to 4,
wherein, in an insertion position of the at least one filter designed as a filter cartridge (58), a flow channel (97) enclosed by the filter jacket (98) of the at least one filter designed as a filter cartridge (58) is fluidically connected to a clean gas chamber (74) of the powder separation device (56).

6. The device (56) according to claim 5,
wherein, in an insertion position of the at least one filter designed as a filter cartridge (58), the at least one filter designed as a filter cartridge (58) is fluidically connected to a clean gas line (73), wherein the clean gas line (73) opens into the clean gas chamber (74).

7. A powder coating installation comprising a coating booth (43) and a powder separation device (56) according to one of claims 1 to 6.

8. A filter for a powder separation device (56), in particular for a powder separation device (56) according to one of claims 1 to 6, wherein the filter is designed as a filter cartridge (58) which has a filter jacket (98) surrounding a flow channel (97) through which a powder-air mixture can flow (98) enclosing a flow channel (97) through which a powder-air mixture can flow, and a flange portion (90) connected to the filter jacket (98) at an end region, in particular at an upper end region, of the filter jacket (98), wherein, as seen in a top view of the flange portion (90), the flange portion (90) is at least substantially rectangular in shape and has an opening (95) arranged in particular concentrically, which is aligned at least partially or in areas coaxially with the flow channel (97), and wherein the flange portion (90) is preferably formed from an electrically conductive material, in particular plastic material, wherein the flange portion (90) of the filter designed as a filter cartridge (58) has two second side edges (92) opposite one another, which each extend orthogonally to an insertion direction of the filter designed as a filter cartridge (58), wherein a first side edge of the second side edges (92) has a first connecting element (93.1) and a second side edge of the second side edges (92) has a second connecting element (93.2), wherein the first connecting element (93.1) is designed at least partially or in areas to be complementary to the second connecting element (93.2) in such a way that a form-locking connection can be formed between the first and second connecting elements (93.1, 93.2),
**characterized in that**
the first connecting element (93.1) is designed as an upwardly directed groove which extends over the entire length of a first side edge of the second side edges (92) and the second connecting element (93.2) is designed as a downwardly directed groove that is complementary to the upwardly directed groove and extends over the entire length of a second side edge of the second side edges (92); and
that grips, grip recesses or grip openings (94) are formed in a region of the second side edges (92) of the flange portion (90).

9. The filter according to claim 8,
wherein the flange portion (90) of the filter designed as a filter cartridge (58) is designed such that the filter designed as a filter cartridge (58) can be inserted into a raw gas chamber (70) of the powder separation device (56) via a guide system (76).

10. The filter according to claim 8 or 9,
wherein the flange portion (90) of the filter designed as a filter cartridge (58) has two first side edges (91) facing each other, which are designed at least partially or in areas to be complementary to guide rails of the guide system (76) such that the filter designed as a filter cartridge (58) can be inserted into the raw gas chamber (70) of the powder separation device (56) via the two opposite first side edges (91) of the flange portion (90).

11. The filter according to any one of claims 8 to 10,
wherein the opening (95) of the flange portion (90), which is arranged in particular concentrically (90), has a circumferential seal (96) which is designed in particular to seal a flow connection between the flow channel (97) and an opening of a clean gas line (73) when the filter designed as a filter cartridge (58) is in an installed position or insertion position.

12. The filter according to any one of claims 8 to 11,
wherein at least one receptacle or hole is formed in the flange portion (90), wherein the at least one receptacle or hole is designed to receive, for positioning the filter in an insertion position within the raw gas chamber (70) of a powder separation device (56), a clamping element, in particular of pin shape, at least partially or in areas in a form-fitting manner.

## Revendications

1. Dispositif (56) destiné à une séparation de poudre à partir d'un mélange poudre/air, en particulier d'un mélange poudre/air présent lors d'un fonctionnement de revêtement d'une installation de revêtement (1) et aspiré hors d'une cabine de revêtement (43) de l'installation de revêtement (1), dans lequel le dispositif (56) présente les éléments suivants :
- un boîtier (71) entourant, au moins en partie ou dans certaines zones, une chambre à gaz brut (70) comprenant une entrée de gaz brut reliée ou pouvant être reliée en communication fluidique à un canal de gaz brut (75), et une sortie de gaz épuré ; et
- au moins un filtre agencé ou devant être agencé dans la chambre à gaz brut (70) et réalisé comme cartouche filtrante (58), qui présente une enveloppe filtrante (98) et une zone de bride (90) reliée à l'enveloppe filtrante (98),
dans lequel il est formé, dans le boîtier (71) du dispositif de séparation de poudre (56), un système de guidage (76), en particulier un système de rails de guidage, qui est formé pour interagir avec la zone de bride (90) du filtre réalisé comme cartouche filtrante (58) de telle sorte que le filtre réalisé comme cartouche filtrante (58) peut être enfoncé dans la chambre à gaz brut (90) dans une direction d'enfoncement définie par le système de guidage (76), dans lequel la zone de bride (90) du filtre réalisé comme cartouche filtrante (58) présente deux seconds bords latéraux opposés l'un à l'autre (92) qui s'étendent chacun de manière orthogonale à une direction d'enfoncement du filtre réalisé comme cartouche filtrante (58), dans lequel un premier bord latéral des seconds bords latéraux (92) présente un premier élément de liaison (93.1) et un second bord latéral des seconds bords latéraux (92) présente un second élément de liaison (93.2), dans lequel le premier élément de liaison (93.1) est, au moins en partie ou dans certaines zones, réalisé de manière complémentaire au second élément de liaison (93.2) de telle sorte qu'une liaison par coopération de forme peut être réalisée entre le premier et le second élément de liaison (93.1, 93.2),
**caractérisé en ce que**
le premier élément de liaison (93.1) est formé comme rainure dirigée vers le haut qui s'étend sur toute la longueur d'un premier bord latéral des seconds bords latéraux (92) et dans lequel le second élément de liaison (93.2) est formé comme rainure dirigée vers le bas réalisée de manière complémentaire à la rainure dirigée vers le haut, qui s'étend sur toute la longueur d'un second bord latéral des seconds bords latéraux (92) ; et
**en ce que** des poignées, des évidements de poignées ou des ouvertures de poignées (94) sont formés dans une zone des seconds bords latéraux (92) de la zone de bride (90).

2. Dispositif (56) selon la revendication 1,
dans lequel le dispositif (56) présente au moins deux filtres, réalisés chacun comme cartouches filtrantes (58), qui peuvent être enfoncés, en série l'un derrière l'autre, dans la chambre à gaz brut (70) par l'intermédiaire du système de guidage (76) et des zones de bride correspondantes (90) desdits au moins deux filtres réalisés comme cartouches filtrantes (58) dans la direction d'enfoncement définie.

3. Dispositif (56) selon la revendication 1 ou 2,
dans lequel il est associé au dispositif de guidage (76) une butée pouvant être actionnée en particulier manuellement, par l'intermédiaire de laquelle ledit au moins un filtre réalisé comme cartouche filtrante (58) peut être arrêté si nécessaire dans une position d'enfoncement dans l'intérieur de la chambre à gaz brut (70).

4. Dispositif (56) selon l'une des revendications 1 à 3,
dans lequel la chambre à gaz brut (70) présente en outre une sortie de poudre prévue dans une zone inférieure de la chambre à gaz brut (70) et raccordée ou pouvant être raccordée en communication fluidique au niveau d'une trémie de sortie (72).

5. Dispositif (56) selon l'une des revendications 1 à 4,
dans lequel, dans une position d'enfoncement dudit au moins un filtre réalisé comme cartouche filtrante (58), un canal d'écoulement (97) entouré par l'enveloppe filtrante (98) dudit au moins un filtre réalisé comme cartouche filtrante (58) est relié en communication fluidique à une chambre à gaz épuré (74) du dispositif de séparation de poudre (56).

6. Dispositif (56) selon la revendication 5,
dans lequel, dans une position d'enfoncement dudit au moins un filtre réalisé comme cartouche filtrante (58), ledit au moins un filtre réalisé comme cartouche filtrante (58) est raccordé en communication fluidique à une conduite de gaz épuré (73), dans lequel la conduite de gaz épuré (73) débouche dans la chambre à gaz épuré (74).

7. Installation de revêtement par poudre comprenant une cabine de revêtement (43) et un dispositif de séparation de poudre (56) selon l'une des revendications 1 à 6.

8. Filtre pour un dispositif de séparation de poudre (56), en particulier pour un dispositif de séparation de poudre (56) selon l'une des revendications 1 à 6, le filtre étant réalisé comme cartouche filtrante (58), qui présente une enveloppe filtrante (98) entourant un canal d'écoulement (97) dans lequel peut s'écouler un mélange poudre/air, et une zone de bride (90) au niveau d'une zone d'extrémité, en particulier au niveau d'une zone d'extrémité supérieure, de l'enveloppe filtrante (98), reliée à l'enveloppe filtrante (98), dans lequel, dans une vue de dessus de la zone de bride (90), la zone de bride (90) est réalisée au moins sensiblement dans une forme rectangulaire et présente une ouverture (95) agencée en particulier de manière concentrique, qui est dirigée, au moins en partie ou dans certaines zones, coaxialement par rapport au canal d'écoulement (97), et dans lequel la zone de bride (90) est constituée de préférence en un matériau électriquement conducteur, en particulier un matériau en plastique, dans lequel la zone de bride (90) du filtre réalisé comme cartouche filtrante (58) présente deux seconds bords latéraux (92) opposés l'un à l'autre qui s'étendent chacun de manière orthogonale par rapport à une direction d'enfoncement du filtre réalisé comme cartouche filtrante (58), dans lequel un premier bord latéral des seconds bords latéraux (92) présente un premier élément de liaison (93.1) et un second bord latéral des seconds bords latéraux (92) présente un second élément de liaison (93.2), dans lequel le premier élément de liaison (93.1) est réalisé, au moins en partie ou dans certaines zones, de manière complémentaire au second élément de liaison (93.2) de telle sorte qu'une liaison par coopération de forme peut être formée entre le premier et le second élément de liaison (93.1, 93.2),
**caractérisé en ce que**
le premier élément de liaison (93.1) est formé comme rainure dirigée vers le haut qui s'étend sur toute la longueur d'un premier bord latéral des seconds bords latéraux (92) et dans lequel le second élément de liaison (93.2) est formé comme rainure dirigée vers le bas réalisée de manière complémentaire à la rainure dirigée vers le haut, qui s'étend sur toute la longueur d'un second bord latéral des seconds bords latéraux (92) ; et
**en ce que** des poignées, des évidements de poignées ou des ouvertures de poignées (94) sont formés dans une zone des seconds bords latéraux (92) de la zone de bride (90).

9. Filtre selon la revendication 8,
dans lequel la zone de bride (90) du filtre réalisé comme cartouche filtrante (58) est formée de telle sorte que le filtre réalisé comme cartouche filtrante (58) peut être enfoncé par l'intermédiaire d'un système de guidage (76) dans une chambre à gaz brut (70) du dispositif de séparation de poudre (56).

10. Filtre selon la revendication 8 ou 9,
dans lequel la zone de bride (90) du filtre réalisé comme cartouche filtrante (58) présente deux premiers bords latéraux opposés l'un à l'autre (91) qui sont formés, au moins en partie ou dans certaines zones, de manière complémentaire à des rails de guidage du système de guidage (76), de telle sorte que le filtre réalisé comme cartouche filtrante (58) peut être enfoncé dans la chambre à gaz brut (70) du dispositif de séparation de poudre (56) par l'intermédiaire des deux premiers bords latéraux (91) opposé l'un à l'autre de la zone de bride (90).

11. Filtre selon l'une des revendications 8 à 10,
dans lequel l'ouverture (95), agencée en particulier de manière concentrique, de la zone de bride (90) présente un joint périphérique (96) qui est en particulier formé pour étancher une liaison en communication fluidique entre le canal d'écoulement (97) et une ouverture d'une conduite de gaz épuré (73) dans une position d'insertion ou d'enfoncement du filtre réalisé comme cartouche filtrante (58).

12. Filtre selon l'une des revendications 8 à 11,
dans lequel il est réalisé, dans la zone de bride (90), au moins un logement ou un trou, dans lequel ledit au moins un logement ou ledit au moins un trou est formé pour recevoir, au moins en partie ou dans certaines zones, par coopération de forme, un élément de serrage en particulier en forme de tige pour positionner le filtre dans une position d'enfoncement à l'intérieur de la chambre à gaz brut (70) d'un dispositif de séparation de poudre (56).
